# EUROPEAN PATENT APPLICATION

(11) **EP 3 026 560 A1**
(43) Date of publication of application: **01.06.2016**
(21) Application number: 14306921.9
(22) Date of filing: 28.11.2014
(51) Int. Cl.: G06F 11/10, G06F 21/00

(54) **Method and device for providing verifying application integrity**

(71) Applicant: Thomson Licensing, 92130 Issy-les-Moulineaux (FR)
(72) Inventor: Salmon-Leganeur, Charles, 35576 Cesson Sévigné (FR); Karroumi, Mohamed, 35576 Cesson Sévigné (FR)
(74) Representative: Browaeys, Jean-Philippe

(57) **Abstract**

During execution of modified code (S302), a device (110) generates (S304) a checksum for the modified code, and checks (S306) whether the generated checksum matches one of a plurality of stored possible checksums for the modified code (226), each possible checksum corresponding to a possible code obtained by modification of an original code that was modified to obtain the modified code. In case of a match, the device (110) verifies (S308) a signature on the plurality of stored possible checksums (226), and, if successfully verified, verifies (S310) the validity of a certificate for the signing key. The solution is particularly suitable for devices using the Android OS since the DEX during installation is optimized to an ODEX for which there is no certified checksum.

## Description

### TECHNICAL FIELD

The present disclosure relates generally to computer systems and in particular to integrity of software code in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is, for various reasons, often desirable to ensure that processing devices execute software that has not been tampered with. To this end, different techniques can be used to protect a software image against tampering attacks. The most common technique is to compute a signature or a checksum over code segments and then verify the signature or checksums at a later stage. Checksums are generally computed and verified without any secret while the generation of a cryptographic signature requires a private key and verification of the signature the corresponding public key.

An example of checksum-based protection is CRC32 for the Portable Executable (PE) format used in the Windows operating system. A PE header contains a CRC32 field that gives the checksum of the corresponding code section. To bypass the protection successfully, an attacker first modifies the code section and then replaces the original checksum with a new value computed over the modified code section. This type of attack is possible since the attacker does not need any secret to update checksums of modified code sections.

Given the weakness of checksums, cryptographic signatures are a preferred solution. The generation of the signature is performed before the code release and uses a private (and thus secret) key. The associated public key is appended to the code and later used to check the code integrity at installation of the code or at runtime. An attacker can still modify the code, but since a correct signature for the code cannot be generated without the private key, the attack fails.

Many solutions exist for checking the integrity of applications based on native code, such as the solutions provided by Arxan (GuardIT™), Metaforic (Metafortress™), etc. Native code is a set of assembler instructions directly executable by the processor. The set of instructions does not change after installation, which means that a program integrity value remains the same before and after installation (i.e. remains constant over time). In this case, the signature can be generated beforehand and delivered with the application package.

On the other hand, applications with interpreted code - such as code written in Java, Android DEX code, etc. - comprise intermediate instructions that must be passed through an interpreter before it is executed. Unlike native code, interpreted code can be modified after installation time for optimization purposes. The code modification is generally very dependent on the target platform and is thus not necessarily predictable. If the code is modified, a signature generated at compilation time cannot be used to check code integrity and authenticity dynamically at runtime.

To distribute and install application software onto the previously mentioned Android operating system a file format called APK - Android Application PacKage - is used. To make an APK file, a program for Android is first compiled to an intermediate language, and then its parts are packaged into a compressed archive file (ZIP format). The archive file contains the entire program code in a single DEX (Dalvik EXecutable code) file, various resources (e.g. image files), and the manifest of the APK file. The archive file comprises two additional files: CERT.SF and CERT.RSA. CERT.SF contains cryptographic hashes of all other archive files; CERT.RSA contains the public key used for signature verification. Only CERT.SF is signed with the RSA private key. The RSA signature for the CERT.SF enables validation of the entire content of the APK file during installation. Indeed, all the files mentioned in the CERT.SF file are *indirectly* signed because CERT.SF contains their hashes. Altering any file before installation would cause an error because the software would detect that a file digest does not match the hash in the CERT.SF file. Alternatively, modifying a cryptographic hash value inside the CERT.SF file (as in the attack against checksum-based verification already described) would lead to an error during the signature verification.

A DEX file header also contains a global checksum for the contents of the DEX file. At the first execution of the application, the Android system uses an optimizer which modifies a DEX interpreted byte code into an optimized machine-instructions sequence called ODEX (Optimized DEX) just in time before execution. The optimizer also updates the checksum. The ODEX file is then stored in a specific repository within the Android file system for future use. The ODEX file then becomes the reference for the application software and, when it is present, the original DEX file is not used anymore.

At runtime, the system may verify the integrity of the application using the ODEX checksum. However this option is not set by default in the Android operating system and the Dalvik machine, which is used to execute ODEX code, does not always check ODEX checksums, since checksum verification has a non-negligible impact on execution performance.

Thus it can be seen that in an Android system, the APK signature is verified only at installation time. Furthermore, the APK is not signed by a central authority; the developers use their own non-trusted self-signed certificates that can be easily generated.

As already mentioned, Android applications use an interpreter portable format (DEX). This binary format must execute on a large set of devices with different architectures and characteristics: ARM, x86, MIPS, Little/Big Endian etc. In order to improve performance, the DEX code is modified at the first use of the application to produce the ODEX that is optimized for the target device. During optimization, various things can be modified in the code: instructions can be replaced by others, the alignment of instructions may be changed, the byte order can be swapped, and so on.

The optimization then raises a security issue. While the signature of the DEX file can still be verified, this is not the case for the ODEX file since it has been modified and its integrity is no more linked to the original DEX signature. In other words, integrity and authenticity can only be verified at installation, but not at runtime since an attacker is able to modify the ODEX code and update the checksum in the header accordingly.

The system is thus vulnerable to at least two classes of attacks: the remote attack and the root attack. In the remote attack, a downloaded malicious application elevates its privileges and gains system permissions. The malicious application may then tamper with ODEX files stored on the Dalvik cache repository of the SD card. In the root attack, the attacker obtains an Android device, for example by purloining the device or by accessing the device when the owner is absent without locking the device session. The attacker can then download the application from the SD card through a USB link, modify the application, and then push the modified application back onto the SD card. For the latter attack to be successful, the device must be "rooted" (i.e. allow "root access" control of the device's Android system).

The trust in Android application integrity can thus be broken during the application's life cycle. It is possible to trust what is installed on an Android system, but not necessarily what is running.

It will be appreciated that it is desired to have a solution that overcomes at least part of the problems related to the integrity and authenticity of interpreted code applications. The present disclosure provides such a solution.

### SUMMARY OF DISCLOSURE

In a first aspect, the disclosure is directed to a device for processing a modified application. The device comprises memory configured to store the application that has been obtained through modification of an original application and a plurality of different valid checksums, each valid checksum corresponding to an application obtained through a different modification of the original application, and a processing unit configured to, during execution of the application, generate a checksum for the application, and determine that the integrity of the application is valid in case the generated checksum matches one of the plurality of different valid checksums.

Various embodiments of the first aspect include:
That the memory is further configured to store a signature for the plurality of different valid checksums and a corresponding certificate and that the processing unit is further configured to verify the validity of the signature and the validity of the certificate.

That the application is implemented as Dalvik EXecutable code and the modified application is implemented as Optimized Dalvik EXecutable code.

That the device is a smartphone or a tablet.

In a second aspect, the disclosure is directed to a method for processing an application. During execution of the application a device generates a checksum for the application and determines that the integrity of the application is valid in case the generated checksum matches one of the plurality of different valid checksums.

In an embodiment of the second aspect there is a signature for the plurality of different valid checksums and the device further verifies the validity of the signature using a certificate and verifies the validity of the certificate.

In a third aspect, the disclosure is directed to a computer executable program comprising instructions that, when executed by a processor, cause the processor to perform the method of the second aspect.

In a fourth aspect, the disclosure is directed to a device for generating an application package. The device comprises memory configured to store a signing key and a certificate for the signing key, and a processing unit configured to generate a plurality of checksums, each checksum corresponding to a modified application code resulting from a particular modification to an unmodified application code, sign the plurality of checksums using the signing key to obtain a signature, and store the unmodified application code, the plurality of checksums, the signature and the certificate for the signing key in the application package.

In an embodiment of the fourth aspect, the processor is further configured to output the application package.

In a fifth aspect, the disclosure is directed to a method for generating an application package. A device storing a signing key and a certificate for the signing key generates a plurality of checksums, each checksum corresponding to a modified application code resulting from a particular modification to an unmodified application code, signs the plurality of checksums using the signing key to obtain a signature, stores the unmodified application code, the plurality of checksums, the signature and the certificate for the signing key in the application package, and outputs the application package.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure is implemented;
Figure 2 illustrates functional aspects of the exemplary system; and
Figure 3 illustrates a preferred embodiment of a method according to a preferred embodiment of the present disclosure.

### DESCRIPTION OF EMBODIMENTS

According to the present disclosure, a plurality of ODEX checksums, each checksum corresponding to a specific, possible ODEX, are delivered with the DEX. The integrity of the ODEX is then verified by comparing a generated checksum against the plurality of ODEX checksums.

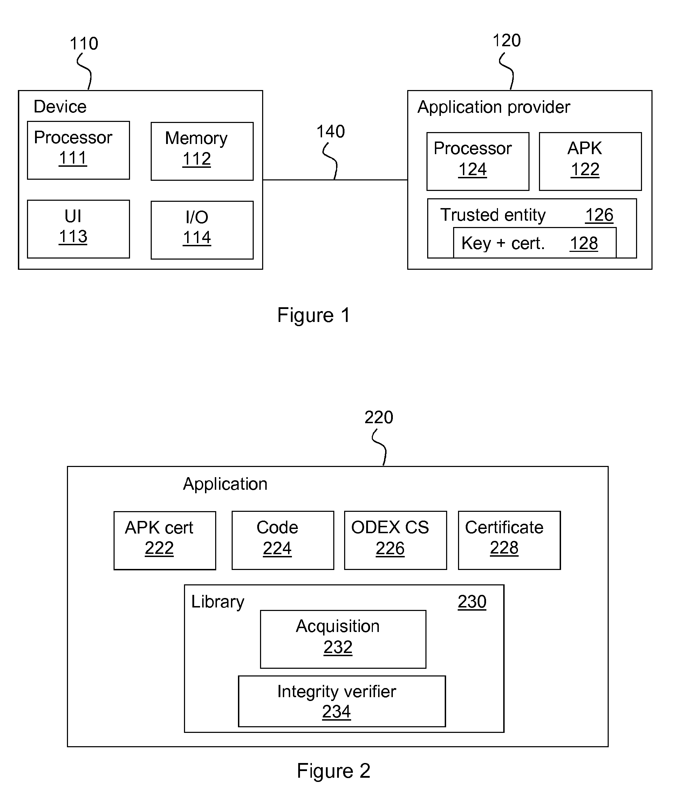

Figure 1 illustrates an exemplary system in which the disclosure is implemented. The system comprises a device 110 and an application provider (preferably the creator of the application, but it may also be an application store) 120. The device 110 can be any kind of suitable device running an Android OS, such as a smartphone or a tablet, and it comprises at least one hardware processing unit ("processor") 111, memory 112, a user interface 113 for interacting with a user, and a communications interface 114 for communication with the application provider 120 over a connection 140 such as the Internet. The skilled person will appreciate that the illustrated device is very simplified for reasons of clarity and that real devices in addition would comprise features such as power supplies and persistent storage.

The application provider 120 comprises a processing unit ("processor") 124 and a trusted entity 126 that is configured to store a signing key and a corresponding certificate 128. The processing unit 124 is configured to perform a plurality of optimizations on a DEX to obtain a plurality of ODEX files and to calculate checksums for each of the plurality of ODEX files. The trusted entity 126, which can be implemented in the processing unit 124, is configured to generate a signature for the plurality of checksums for the plurality of ODEX files. The processing unit 124 is further configured to generate an APK file 122 comprising the DEX, the plurality of checksums, the signature and the certificate 128, and to output the generated APK file 122.

The different ODEX files and corresponding checksums are for different optimizations of the DEX, for example depending on processor architecture (e.g. single core or multi-core), processor endianess, and version of the Android OS.

Figure 2 illustrates functional aspects of the application in the APK file 122. The application 220 comprises the APK certificate 222 signed by a signatory entity, application code 224 (DEX before installation and ODEX after installation), and signed ODEX checksums (CS) 226. The application 200 further comprises a library 230 comprising a source acquisition module 232 and an integrity verification module 234 having access to the certificate 128.

The source acquisition module 232 and the integrity verification module 234 are comprised in the native library of the APK that is packaged with the application and has access to the extended JNI library that among other things allows signature verification.

The source acquisition module 232 is configured to extract the plurality of ODEX checksums 226 and the certificate 228.

The integrity verification module 234 is configured to generate a checksum for the ODEX 224, to compare the generated checksum with the plurality of ODEX checksums 226. In case the generated checksum does not match any of the plurality of ODEX checksums, it is determined that the integrity of the ODEX is not valid.

In case the generated checksum matches one of the plurality of ODEX checksums 226, the signature is verified using the public key in the certificate 228. If successfully verified, the certificate 228 is verified as is well known in the art. If the certificate is successfully verified, it is determined that the integrity of the ODEX is valid.

It will be appreciated that suitable measures may be taken in the instance that the integrity is not valid.

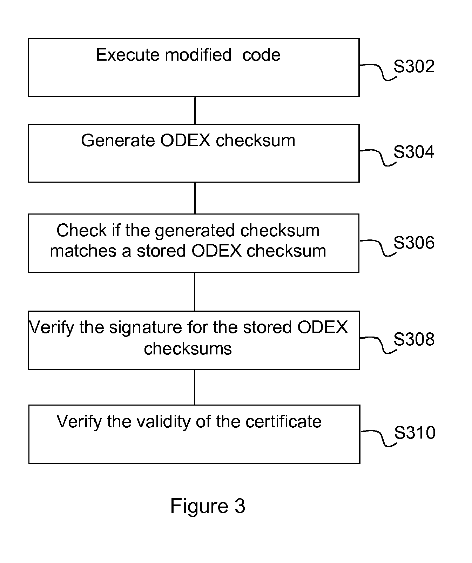

Figure 3 illustrates a flowchart of a method according to a preferred embodiment.

In step S302, the device 110 executes the ODEX, i.e. the modified code, obtained by modification of a DEX, i.e. the unmodified code.

In step S304, the device 110 generates an ODEX checksum for the ODEX 224 and, in step S306, checks whether the generated ODEX checksum matches one of the plurality of stored ODEX checksums 226.

In the instance of a match in step S306, the device 110 verifies the signature on the plurality of stored ODEX checksums 226 in step S308, and, if successfully verified, verifies the validity of the certificate in step S310.

The integrity of the ODEX is determined to have been verified in case of positive verification of the certificate since this is done in the instance where the signature is valid and where the generated ODEX checksum matches one of the plurality of stored ODEX checksums.

The integrity may be checked a plurality of times during the execution of the application.

It is noted that the solution does not require any modification to currently deployed Android systems.

In the present description, the term 'checksum' is intended to cover a value that enables verification of whether or not the data for which it was generated has been modified after generation of the checksum. A checksum may thus for example also be a hash value, a Cyclic Redundancy Check (CRC) value or other kind of digest; it is preferred that it is computationally infeasible to obtain the code from the checksum. In addition, while a single checksum has been used for clarity, a plurality of checksums may be used, wherein a checksum may be generated for a distinct part of the code (wherein the different parts may overlap), and that a plurality of checksums for different parts of the code are used to generate a single, global checksum that is used for the comparison. The signature may be any suitable cryptographic signature such as a Hash-based Message Authentication Code (HMAC) or a signature based on for example RSA, Digital Signature Algorithm (DSA) or Elliptic Curve Digital Signature Algorithm (ECDSA).

It will be appreciated that the present solution can counter both root attacks and remote attacks successfully.

While the present solution has been described in an Android environment, it can be adapted to other operating systems that modify the code during installation without enabling secure integrity verification of the installed application at runtime.

It will thus be appreciated that the present disclosure provides a solution that can enable runtime integrity of applications on Android devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (110) for processing an application (224), the device comprising:
memory (112) configured to store the application (224) that has been obtained through modification of an original application and a plurality of different valid checksums (226), each valid checksum corresponding to an application obtained through a different modification of the original application; and
a processing unit (111) configured to, during execution of the application (224):
- generate a checksum for the application (224); and
- determine that the integrity of the application is valid in case the generated checksum matches one of the plurality of different valid checksums (226).

2. The device of claim 1, wherein the memory is further configured to store a signature for the plurality of different valid checksums (226) and a corresponding certificate (228) and wherein the processing unit (111) is further configured to verify the validity of the signature and the validity of the certificate.

3. The device of claim 1, wherein the application is implemented as Dalvik EXecutable code and the modified application is implemented as Optimized Dalvik EXecutable code.

4. The device of claim 1, wherein the device is a smartphone or a tablet.

5. A method for processing an application comprising at a device (110) during execution (S302) of the application:
- generating (S304) a checksum for the application; and
- determining (S306) that the integrity of the application is valid in case the generated checksum matches one of the plurality of different valid checksums (226).

6. The method of claim 5, wherein there is a signature for the plurality of different valid checksums (226), the method further comprising:
- verifying (S308) the validity of the signature using a certificate (228); and
- verifying (S310) the validity of the certificate.

7. A computer executable program (220) comprising instructions that, when executed by a processor (110), cause the processor to perform the method of claim 5.

8. A device (120) for generating an application package (122; 220), the device comprising:
memory configured to store a signing key and a certificate for the signing key (128); and
a processing unit (124) configured to:
- generate a plurality of checksums, each checksum corresponding to a modified application code resulting from a particular modification to an unmodified application code;
- sign the plurality of checksums using the signing key to obtain a signature; and
- store the unmodified application code, the plurality of checksums, the signature and the certificate for the signing key (128) in the application package.

9. The device of claim 8, wherein the processor is further configured to output the application package (122; 200).

10. A method for generating an application package (122; 220), the method comprising, in a device (120) comprising a processing unit (124) and memory storing a signing key and a certificate for the signing key (128):
- generating a plurality of checksums, each checksum corresponding to a modified application code resulting from a particular modification to an unmodified application code;
- signing the plurality of checksums using the signing key to obtain a signature;
- storing the unmodified application code, the plurality of checksums, the signature and the certificate for the signing key (128) in the application package; and
- outputting the application package (122; 200).
